# EUROPÄISCHE PATENTSCHRIFT

(11) **EP 3 588 756 B1**
(45) Veröffentlichungstag und Bekanntmachung des Hinweises auf die Patenterteilung: **02.07.2025**
(21) Anmeldenummer: 19182878.9
(22) Anmeldetag: 27.06.2019
(51) Int. Cl.: H02M 1/32, H02M 7/5387, H02P 27/06

(54) **VORRICHTUNG UND VERFAHREN ZUM ENTLADEN EINES ZWISCHENKREISKONDENSATORS SOWIE VERFAHREN ZUR HERSTELLUNG EINER VORRICHTUNG ZUM ENTLADEN EINES ZWISCHENKREISKONDENSATORS**
DEVICE AND METHOD FOR DISCHARGING AN INTERMEDIATE CIRCUIT CAPACITOR AND METHOD FOR PRODUCING A DEVICE FOR DISCHARGING AN INTERMEDIATE CIRCUIT CAPACITOR
DISPOSITIF ET PROCÉDÉ DE DÉCHARGE D'UN CONDENSATEUR DE CIRCUIT INTERMÉDIAIRE AINSI QUE PROCÉDÉ DE FABRICATION D'UN DISPOSITIF DE DÉCHARGE D'UN CONDENSATEUR DE CIRCUIT INTERMÉDIAIRE

(30) Priorität: 29.06.2018 DE 102018115802
(43) Veröffentlichungstag der Anmeldung: 01.01.2020
(73) Patentinhaber: Valeo eAutomotive Germany GmbH, 91056 Erlangen (DE)
(72) Erfinder: EDELHÄUSER, Rainer, 90411 Nürnberg (DE); GÖTZE, Thomas, 91315 Höchstadt/Aisch (DE)

(56) Entgegenhaltungen:
- EP-A1- 2 405 565
- EP-B1- 2 405 565
- DE-A1- 102017 004 227
- DE-T5- 112012 005 937
- US-A1- 2013 033 914

## Beschreibung

Die vorliegende Erfindung betrifft eine Vorrichtung zum Entladen eines Zwischenkreiskondensators, umfassend einen Stromrichter zur elektrischen Versorgung einer ein Fahrzeug antreibenden elektrischen Maschine, welcher den Zwischenkreiskondensator und eine parallel zum Zwischenkreiskondensator geschaltete Entladeeinrichtung mit einer Reihenschaltung aus einem steuerbaren Schaltelement und einem Lastwiderstand aufweist, und eine den Stromrichter eingangsseitig speisende Hochvoltbatterie.

Daneben betrifft die Erfindung ein Verfahren zum Entladen eines Zwischenkreiskondensators und ein Verfahren zur Herstellung einer Vorrichtung zum Entladen eines Zwischenkreiskondensators.

Zwischenkreiskondensatoren dienen dazu, transient hohe Ströme beim Betrieb eines Stromrichters bereitzustellen. In einem Fehlerfall oder beim Unfall eines den Stromrichters aufweisenden Fahrzeugs ist der Zwischenkreiskondensator mittels einer Entladeeinrichtung zügig auf eine Schutzkleinspannung zu entladen, um die elektrische Sicherheit zu gewährleisten. Dabei muss die im Zwischenkreiskondensator gespeicherte Ladung zumindest bis zum Erreichen der Schutzkleinspannung in Wärme umgewandelt werden. Ein Steuergerät des Fahrzeugs signalisiert, dass der Zwischenkreiskondensator zu entladen ist, wobei das Steuergerät gleichzeitig eine eine Hochvoltbatterie mit dem Zwischenkreiskondensator verbindende Trenneinrichtung zum Trennen dieser Verbindung ansteuert. Typischerweise ist seitens des Stromrichters nicht bekannt, ob diese Trennung erfolgreich war. Ist dies nicht der Fall, kann ein Ansteuern der Entladeeinrichtung zum Entladen des Zwischenkreiskondensators durch einen Lastwiderstand zu dessen Zerstörung führen, da ein Laststrom durch den Lastwiderstand vollständig durch die Hochvoltbatterie bereitgestellt wird.

Das Dokument EP 2 405 565 A1 offenbart ein Leistungswandlersystem, umfassend: eine Wechselrichterschaltungseinheit, die einen von einer Gleichspannungsquelle bereitgestellten Gleichstrom in einen Wechselstrom wandelt, wobei der Gleichstrom der Wechselrichtereinheit über einen Schütz, der den Gleichstrom durchlässt oder unterbricht, bereitgestellt wird; einen Kondensator, der den Gleichstrom glättet; eine Entladeschaltungseinheit, die parallel zum Kondensator geschaltet ist und einen Entladewiderstand und ein dazu in Reihe geschaltetes Schaltelement für den Entladewiderstand aufweist; eine Entladesteuerschaltung, die ein Steuersignal für das Schaltelement zum Entladen ausgibt. Das Steuersignal umfasst einen ersten Testpuls, bzw. eine erste Kette von Testpulsen gefolgt von einer Auswertepause in welcher der während der Testphase erreichte Spannungsunterschied mit einem Schwellwert verglichen wird. Liegt der Spannungsunterschied oberhalb der Schwelle, wird ein langer Entladepuls, bzw. eine lange Entladepulskette geschaltet. Ansonsten wird die Entladung abgebrochen.

Das Dokument DE 11 2012 005937 T5 offenbart ein Elektrofahrzeug mit einer Hauptbatterie, deren Ausgangsspannung 300 V beträgt, die Hauptbatterie ist mit einem Inverter verbunden, der Energie der Hauptbatterie in eine Wechselspannung zur Ansteuerung eines Motors wandelt, wobei dem Inverter ein Kondensator vorgeschaltet ist. Es ist ferner eine Entladeschaltung vorgesehen, die zum Kondensator parallel geschaltet und eine Reihenschaltung aus einem Halbleiterschalter, einem Widerstand und einem Kaltleiter umfasst. Bei Vorliegen einer Bedingung für das Entladen wird ein der Batterie nachgeschaltetes Systemhauptrelais geöffnet und ein Entlade-Controller schließt den Halbleiterschalter. Der Entlade-Controller öffnet den Halbleiterschalter nachdem er eine vorbestimmte Zeitspanne gewartet hat. Die Zeitspanne wird auf eine Zeit gesetzt, in der die Kapazität des Kondensators voraussichtlich entladen werden kann. Charakteristika des Widerstands und des Kaltleiters werden derart gewählt, dass ein Entladen des Kondensators beendet wird, während die Temperatur des Kaltleiters kleiner oder gleich der Curie-Temperatur ist.

Das Dokument US 2013/0033914 A1 offenbart ein Leistungswandlersystem, umfassend: eine Wechselrichterschaltung, die über einen öffenbaren und schließbaren Schütz mit einer Gleichspannungsversorgung verbunden ist; einen Spannungsglättungskondensator, der parallel zu einem Eingang der Wechselrichterschaltung geschaltet ist; eine parallel zum Spannungsglättungskondensator geschaltete Entladeeinheit mit einem Widerstand zum Entladen des Spannungsglättungskondensators und einem mit dem Widerstand in Reihe geschalteten Entladeschaltelement; und einen Entladesteuerabschnitt, der das Entladeschaltelement einschaltet, wenn der Schütz geöffnet ist, und die Entladeschaltung zum Entladen veranlasst.

Das Dokument EP 2 284 982 A1 offenbart eine Entladeschaltung für einen Zwischenkreiskondensator, der in einer Leistungswandlungseinrichtung verwendet wird, umfassend einen Widerstand, der den Kondensator entlädt, einen Schalter, der in Reihe mit dem Widerstand geschaltet ist und einen Entladestrom vom Kondensator zum Widerstand entweder passieren lässt oder unterbricht, eine Messschaltung, die eine Anschlussspannung des Kondensators misst, und eine Steuerschaltung, die den Schalter zum Leiten oder Sperren ansteuert. Nachdem die Steuerschaltung den Schalter zum Leiten angesteuert und die Entladung des Kondensators durch den Widerstand begonnen hat, steuert sie den Schalter zum Sperren und zum Beenden des Entladens durch den Widerstand an, wenn die durch die Messschaltung gemessene Anschlussspannung des Kondensators von einer vorgegebenen Spannungsverrichtungscharakteristik abweicht.

Eine solche Vorrichtung ermöglicht zwar einen Abbruch des Entladens, wenn der Zwischenkreiskondensator mit der Hochvoltbatterie verbunden ist. Sie erfordert jedoch einen erheblichen Bauteilaufwand, da zum einen die Messchaltung und zum anderen die Steuerschaltung, die aufwändige Vergleichsoperationen der gemessenen Anschlussspannung mit der Spannungsverringerungscharakteristik durchführen muss, benötigt werden. Dies ist typischerweise nur durch einen Mikrocontroller realisierbar, der als sicherheitskritisches Bauelement hohe Integritätsanforderungen erfüllen muss. Dies führt zu einem erheblichen Design- und Herstellungsaufwand einer solchen Vorrichtung.

Der Erfindung liegt mithin die Aufgabe zu Grunde, eine aufwandsärmer zu realisierende Möglichkeit zum Entladen eines Zwischenkreiskondensators anzugeben, die auch bei einer fehlenden Trennung einer Gleichspannungsquelle vom Zwischenkreiskondensator dessen Beschädigung verhindert.

Zur Lösung dieser Aufgabe wird erfindungsgemäß eine Vorrichtung gemäß Anspruch 1 vorgeschlagen.

Die vorliegende Erfindung beruht auf der Überlegung, das Schaltelement der Entladeeinrichtung ohne jegliche Prüfung, ob der Zwischenkreiskondensator tatsächlich von der Hochvoltbatterie getrennt ist, zum Entladen des Zwischenkreiskondensators anzusteuern und den Stromrichter, einschließlich des Lastwiderstands, strukturell so auszulegen, dass auch im ungünstigsten Fall eines von der Hochvoltbatterie fließenden Laststroms eine Beschädigung des Zwischenkreiskondensators vermieden wird. Dabei ist die festgelegte Dauer erfindungsgemäß so gewählt, dass bei einer Aufladung des Kondensators mit der maximalen Dauerspannung der Hochvoltbatterie dieser bis zu einer Schutzkleinspannung entladen wird, wenn der Zwischenkreiskondensator von der Hochvoltbatterie getrennt ist. Die folgenden Schaltvorgänge führen dann nur zu geringen, weiteren Lastströmen. Ist die Hochvoltbatterie hingegen nicht vom Zwischenkreiskondensator getrennt, so werden durch die weiteren Schaltvorgänge weitere Versuche zur Entladung des Zwischenkreiskondensators unternommen, da die Trennung zwischenzeitlich doch noch erfolgt sein könnte. Da der Stromrichter strukturell so ausgelegt ist, dass der Lastwiderstand während des Anliegens der maximalen Dauerspannung zwar erwärmt, aber während der anschließenden Wartezeiten wieder abgekühlt wird, kommt es bei der fest vorgegebenen Anzahl von Schaltvorgängen zu keiner Beschädigung des Lastwiderstands.

Mit Vorteil kann so ohne jegliche Überwachung der über dem Zwischenkreiskondensator abfallenden Spannung eine sichere Entladestrategie realisiert werden. Insbesondere kann auf aufwändige Messeinrichtungen und eine komplexe, hohen Integritätsanforderungen unterliegende Auswertung der Zwischenkreisspannung verzichtet werden. Die Ansteuerung des Schaltelements durch die Steuerungseinrichtung ist nämlich so einfach implementierbar, dass auf einen Mikrocontroller verzichtet werden kann.

Erfindungsgemäß beträgt die fest vorgegebene Anzahl von Schaltvorgängen wenigstens zwei, bevorzugt wenigstens fünf. Diese Anzahl stellt nach empirischen Versuchen einen sinnvollen Kompromiss zwischen der Temperatur- und Strombeständigkeit des Lastwiderstands und der Wahrscheinlichkeit, dass ein zeitnahes Trennen der Hochvoltbatterie vom Zwischenkreiskondensator erfolgt, dar. Zweckmäßigerweise beträgt die fest vorgegebene Dauer eines Schaltvorgangs wenigstens eine Sekunde und/oder höchstens drei Sekunden. Die Wartezeit kann wenigstens vier Sekunden und/oder höchstens sieben Sekunden betragen.

Erfindungsgemäß ist die Steuerungseinrichtung ferner dazu eingerichtet, das Schaltelement nach dem Letzten der Schaltvorgänge und nach Ablauf einer fest vorgegebenen zweiten Wartezeit, die länger als die erste Wartezeit ist, mehrfach zum Durchführen weiterer Schaltvorgänge anzusteuern, wobei zwischen zwei aufeinanderfolgenden weiteren Schaltvorgängen jeweils die zweite Wartezeit vorgesehen ist. Typischerweise erreicht der Lastwiderstand nach dem letzten der ersten Schaltvorgänge nahezu seine thermische Belastungsgrenze. Danach ist für die Dauer der zweiten Wartezeit eine intensivere Abkühlung erforderlich. Anschließend wird für den Fall, dass nach den ersten Schaltvorgängen noch keine Trennung des Zwischenkreiskondensators von der Hochvoltbatterie erfolgt ist, durch die weiteren Schaltvorgänge der Versuch unternommen, doch noch eine Entladung des Zwischenkreiskondensators infolge einer zwischenzeitlich eingetretenen Trennung zu erreichen. Dafür werden aber die längeren, durch die zweite Wartezeit realisierten Abkühlphasen genutzt. Die zweite Wartezeit kann mindestens 10 Sekunden, insbesondere mindestens 25 Sekunden, und/oder höchstens 50 Sekunden, insbesondere höchstens 35 Sekunden, betragen.

Ferner ist die Steuerungseinrichtung bevorzugt dazu eingerichtet, die Entladeeinrichtung zum Durchführen der weiteren Schaltvorgänge bis zum Erhalten eines Deaktivierungssignals am Eingang anzusteuern. Es ist mithin keine feste Anzahl von weiteren Schaltvorgängen vorgesehen. Diese werden vielmehr solange durchgeführt, bis ein Deaktivierungssignal vorliegt oder eine Spannungsversorgung, insbesondere Niederspannungsversorgung, der Steuerungseinrichtung ausfällt.

Wie bereits eingangs angedeutet, ist bei der erfindungsgemäßen Vorrichtung bevorzugt vorgesehen, dass der Zwischenkreiskondensator und die Hochvoltbatterie über eine eine Trenneinrichtung aufweisende elektrische Verbindung miteinander verbunden sind und ein Steuergerät vorgesehen ist, welches unabhängig von der ersten Steuerungseinrichtung betreibbar und dazu eingerichtet ist, einen Wechsel des Signalzustands als die Entladung des Zwischenkreiskondensators anforderndes Eingangssignal sowohl der Steuerungseinrichtung als auch der Trenneinrichtung bereitzustellen.

Die der Erfindung zugrunde liegende Aufgabe wird ferner durch ein Verfahren zum Entladen eines Zwischenkreiskondensators gemäß Anspruch 7 gelöst.

Schließlich wird die der Erfindung zugrunde liegende Aufgabe durch ein Verfahren zur Herstellung einer Vorrichtung zum Entladen eines Zwischenkreiskondensators gemäß Anspruch 8 gelöst.

Sämtliche Ausführungen zur erfindungsgemäßen Vorrichtung lassen sich analog auf die erfindungsgemäßen Verfahren übertragen, so dass auch mit diesen die zuvor genannten Vorteile erzielt werden können.

Weitere Vorteile und Einzelheiten der vorliegenden Erfindung ergeben sich aus den im folgenden beschriebenen Ausführungsbeispielen sowie anhand der Zeichnungen. Diese sind schematische Darstellungen und zeigen:
- Fig. 1: ein Blockschaltbild eines Ausführungsbeispiels der erfindungsgemäßen Vorrichtung zum Entladen eines Zwischenkreiskondensators; und
- Fig. 2: zeitliche Verläufe eines Ansteuersignals für ein Schaltelement einer Entladeeinrichtung und einer Temperatur eines Lastwiderstands der Entladeeinrichtung.

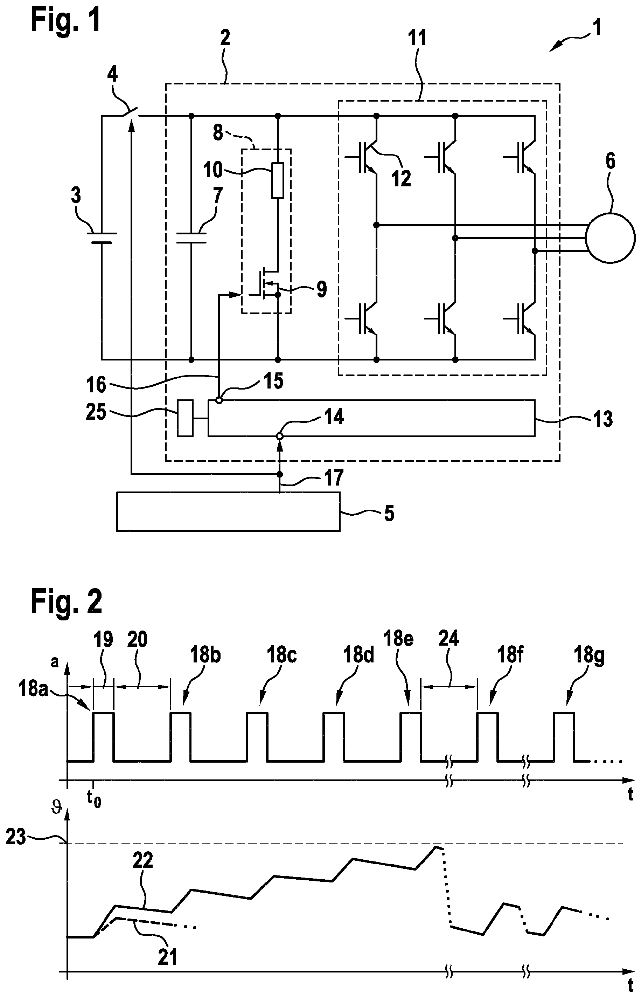

Fig. 1 ist eine Prinzipskizze eines Ausführungsbeispiels einer Vorrichtung 1, welche einen Stromrichter 2, eine Hochvoltbatterie 3, eine die Hochvoltbatterie 3 eingangsseitig mit dem Stromrichter 2 verbindende Trenneinrichtung 4 und ein Steuergerät 5 aufweist. Die Vorrichtung 1 ist insbesondere Teil eines Hochvoltbordnetzes eines elektrisch antreibbaren Fahrzeugs, insbesondere eines Elektrofahrzeugs oder eines Hybridfahrzeugs, wobei der Stromrichter 2 dazu eingerichtet ist, eine von der Hochvoltbatterie 3 bereitgestellte Gleichspannung von beispielsweise 500 Volt in eine mehrphasige Wechselspannung zum Versorgen einer das Fahrzeug antreibenden elektrischen Maschine 6 zu wandeln.

Der Stromrichter 2 umfasst einen Zwischenkreiskondensator 7 und eine parallel dazu geschaltete Entladeeinrichtung 8 mit einer Reihenschaltung aus einem steuerbaren Schaltelement 9 und einem Lastwiderstand 10. Daneben umfasst der Stromrichter 2 eine Leistungseinheit 11 mit einer Vielzahl von zu Halbbrücken verschalteten Leistungsschaltelementen, beispielsweise IGBT, welche derart ansteuerbar sind, dass sie die Gleichspannung in die mehrphasige Wechselspannung wandeln.

Der Stromrichter 2 umfasst eine Steuerungseinrichtung 13, welche dazu eingerichtet ist, das Schaltelement 9 der Entladeeinrichtung 8 in Abhängigkeit eines Signalzustands an einem Eingang 14 der Steuerungseinrichtung 13 anzusteuern. Dazu stellt die Steuerungseinrichtung 13 an einem Ausgang 15 ein Ansteuersignal 16 für das Schaltelement 9 bereit.

Die Steuerungseinrichtung 13 erhält ein Eingangssignal 17 am Eingang 14 vom Steuergerät 5, welche als übergeordnetes Steuergerät des Fahrzeugs ausgebildet ist. Das Steuergerät 5 gibt das Eingangssignal 17 als Deaktivierungssignal aus, bei dessen Erhalt am Eingang 14 die Steuerungseinrichtung 13 eine Ansteuerung des Schaltelements 9 zum Entladen des Zwischenkreiskondensators 7 unterdrückt. Wenn das Steuergerät 5 eine Entladung des Zwischenkreiskondensators 7 anfordert, beispielsweise wegen einer Störung, eines Unfalls oder beim Abstellen des Fahrzeugs, oder wenn das Eingangssignal 17 am Eingang 15 wegfällt, beispielsweise wegen eines Kommunikationsfehlers zwischen den Steuerungseinrichtungen 5, 13, so steuert die Steuerungseinrichtung 13 das Schaltelement 9, wie im Folgenden detailliert beschrieben wird, zum Leiten an, wodurch der Lastwiderstand 10 parallel zum Zwischenkreiskondensator 7 geschaltet wird. Das Steuergerät 5 stellt das Eingangssignal 17 ferner der Trenneinrichtung 4 bereit, welche den Zwischenreiskondensator 7 beim Anfordern des Entladens von der Hochvoltbatterie 3 trennt.

Die primäre Funktion der Vorrichtung 1 ist daher, den Zwischenkreiskondensator 7 bei einer Anforderung durch das Steuergerät 5 von der Hochvoltbatterie 3 zu trennen und das Schaltelement 9 leitend zu schalten, so dass die im Zwischenkreiskondensator 7 gespeicherte elektrische Energie zumindest bis zum Erreichen einer Schutzkleinspannung, beispielsweise in Höhe von 60 Volt, in Wärme umgesetzt wird.

Es sind jedoch auf Fälle denkbar, in denen durch den Wechsel des Signalzustands am Eingang 14 ein Schaltvorgang durch das Schaltelement 9 eingeleitet wird, jedoch keine Trennung der Hochvoltbatterie 3 von dem Zwischenkreiskondensator 7 mittels der Trenneinrichtung 4 erfolgt. Dies umfasst beispielsweise Fälle, in denen die Kommunikation zwischen dem Steuergerät 5 und der Steuerungseinrichtung 13 gestört ist, so dass die Steuerungseinrichtung 13 eine Entladung des Zwischenkreiskondensators 7 vorgibt, obwohl das Steuergerät 5 eine solche gar nicht angefordert hat. Außerdem ist es denkbar, dass die Trenneinrichtung 4 trotz Anforderung durch das Steuergerät 5 nicht wie vorgesehen trennt, beispielsweise weil mechanische Schalter der Trenneinrichtung 4 im geschlossenen Zustand "hängen".

Fig. 2 zeigt zeitliche Verläufe des mit a bezeichneten Signalzustands des Ansteuersignals 16 und einer Temperatur ϑ des Lastwiderstands 10.

Zu einem Zeitpunkt t₀ ändert sich der Signalzustand des Eingangssignals 17 am Eingang 14 der Steuerungseinrichtung 13. In Reaktion auf diese Änderung des Signalzustands steuert die Steuerungseinrichtung 13 das Schaltelement 9 zum Durchführen einer fest vorgegebenen Anzahl von fünf Schaltvorgängen 18a bis 18e mit einer fest vorgegebenen Dauer 19 und einer fest vorgegebenen ersten Wartezeit 20 zwischen zwei aufeinanderfolgenden Schaltvorgängen 18a bis 18e an. Ist die Hochvoltbatterie 3 mittels des Trennelements 4 vom Zwischenkreiskondensator 7 erfolgreich getrennt, so wird der Zwischenkreiskondensator 7 von seiner momentanen Spannung innerhalb der Dauer 19 von vorliegend zwei Sekunden auf die Schutzkleinspannung entladen. Dabei stellt sich der rein qualitativ dargestellte Temperaturverlauf 21 am Lastwiderstand 10 ein. Die folgenden Schaltvorgänge 18b bis 18e tragen nur zu einer weiteren Entladung des Zwischenkreiskondensators 7 unterhalb der Schutzkleinspannung bei.

Ist der Zwischenkreiskondensator 7 jedoch weiterhin mit der Hochvoltbatterie 3 verbunden, so wird ein während des Schaltvorgangs 18a durch den Lastwiderstand 10 fließender Laststrom im Wesentlichen durch die Hochvoltbatterie 3 bereitgestellt, die je nach Betriebszustand ihre maximale Dauerspannung bereitstellen kann. Dies führt zu einer erheblichen Erwärmung des Lastwiderstands 10, die durch den Temperaturverlauf 22 beschrieben ist. Ersichtlich erwärmt sich der Lastwiderstand 10 stark und kühlt während der Wartezeit 20 ein wenig ab. Kommt es auch im Folgenden nicht zu einer Trennung durch die Trenneinrichtung 4, so erwärmt sich der Lastwiderstand 10 während der Schaltvorgang 18b bis 18e weiter bis er nach dem Schaltvorgang 18e eine Maximaltemperatur 23 erreicht hat, die er beschädigungslos übersteht. Der Lastwiderstand 10 und seine Wärmeübertragung an den Stromrichter 2 sind mithin derart eingerichtet, dass der Lastwiderstand 10 beim Anliegen der maximalen Dauerspannung der Hochvoltbatterie 3 während eines jeweiligen Schaltvorgangs 18a bis 18e und einer Abkühlung während der Wartezeiten 20 nicht beschädigt wird. Sollte die Trenneinrichtung 4 zwischen dem Zeitpunkt t₀ und dem Beginn des Schaltvorgangs 18e die Hochvoltbatterie 3 vom Zwischenkreiskondensator 7 trennen, so erfolgt während eines der Schaltvorgänge 18b bis 18e eine Entladung des Zwischenkreiskondensators 7 auf die Schutzkleinspannung, ohne dass die Maximaltemperatur 23 im Folgenden erreicht wird.

Die Steuerungseinrichtung 13 ist ferner dazu eingerichtet, das Schaltelement 9 nach dem letzten Schaltvorgang 18e und einem Ablauf einer zweiten Wartezeit 24, die länger als die erste Wartezeit 20 ist und vorliegend 30 Sekunden beträgt, mehrfach zum Durchführen weiterer Schaltvorgänge 18f, 18g anzusteuern, wobei zwischen zwei aufeinanderfolgenden weiteren Schaltvorgängen 18f, 18g jeweils die zweite Wartezeit 24 vorgesehen ist. Die weiteren Schaltvorgänge 18f, 18g werden dabei solange durchgeführt, bis die Steuerungseinrichtung 13 am Eingang 14 ein Deaktivierungssignal erhält. Das Vorsehen der weiteren Schaltvorgänge 18f, 18g beruht auf der Überlegung, dass nach den ersten fünf Schaltvorgängen 18a bis 18e die Wahrscheinlichkeit für eine Trennung der Hochvoltbatterie 3 vom Zwischenkreiskondensator 7 verhältnismäßig klein ist, so dass nur noch dann die weiteren Schaltvorgänge 18f, 18g durchgeführt werden, wenn durch Einhalten der zweiten Wartezeit 24 sichergestellt ist, dass die Temperatur 23 auch bei einer unbestimmten Anzahl weiterer Schaltvorgänge 18f, 18g nicht erreicht wird. Dennoch werden durch die Schaltvorgänge 18f, 18g weiterhin Versuche unternommen, eine Entladung des Zwischenkreiskondensators 7 zu erreichen, falls die Trenneinrichtung 4 doch noch eine Trennung realisieren sollte.

Die weiteren Schaltvorgänge 18f, 18g werden mithin bis zum Erhalten des Deaktivierungssignals am Eingang 14 durchgeführt, längstens jedoch bis eine Niedervoltspanungsversorgung 25 der Steuerungseinrichtung 13 entfällt.

Die Vorrichtung 1 kann mithin durch ein Verfahren hergestellt werden, bei dem in einem ersten Schritt die Hochvoltbatterie 3 zum Speisen des Stromrichters 2 und der Zwischenkreiskondensator 7 für den Stromrichter 2 bereitgestellt werden. In einem folgenden Herstellungsschritt wird die Steuerungseinrichtung 13 bereitgestellt, die zur Durchführung der zuvor beschriebenen Schaltvorgänge 18a bis 18g eingerichtet ist. Anschließend wird die durch die Steuerungseinrichtung 13 anzusteuernde Entladeeinrichtung 8 bereitgestellt, wobei der Lastwiderstand 10 derart gewählt und in den Stromrichter 2 integriert wird, dass der Lastwiderstand 10 bei einem Anliegen einer maximalen Dauerspannung der Hochvoltbatterie 3 für die festgelegte Dauer 19 und anschließende Abkühlung während einer jeweiligen Wartezeit 20, 24 nicht beschädigt wird. Anschließend werden die Hochvoltbatterie 3 mit der Entladeeinrichtung 8 und dem Zwischenkreiskondensator 7 über die Trenneinrichtung 4 verbunden und die Steuerungseinrichtung 13 mit der Entladeeinrichtung 8 verbunden.

## Patentansprüche

1. Vorrichtung (1) zum Entladen eines Zwischenkreiskondensators (7), umfassend einen Stromrichter (2) zur elektrischen Versorgung einer ein Fahrzeug antreibenden elektrischen Maschine (6), welcher den Zwischenkreiskondensator (7) und eine parallel zum Zwischenkreiskondensator (7) geschaltete Entladeeinrichtung (8) mit einer Reihenschaltung aus einem steuerbaren Schaltelement (9) und einem Lastwiderstand (10), aufweist, und eine den Stromrichter (2) eingangsseitig speisende Hochvoltbatterie (3), wobei
der Stromrichter (2) eine Steuerungseinrichtung (13) aufweist, welche dazu eingerichtet ist, das Schaltelement (9)
- in Abhängigkeit eines Signalzustands an einem Eingang (14) der Steuerungseinrichtung (13) zum Durchführen einer fest vorgegebenen Anzahl von Schaltvorgängen (18a-18e), bei denen das Schaltelement (9) leitet, mit einer fest vorgegebenen Dauer (19) und einer fest vorgegebenen ersten Wartezeit (20) zwischen zwei aufeinanderfolgenden Schaltvorgängen (18a-18e) und
- nach dem Letzten der fest vorgegebenen Anzahl von Schaltvorgängen (18a-18e) und Ablauf einer fest vorgegebenen zweiten Wartezeit (24), die länger als die erste Wartezeit (20) ist, mehrfach zum Durchführen weiterer Schaltvorgänge (18f, 18g)
anzusteuern, wobei
die fest vorgegebene Anzahl von Schaltvorgängen (18a-18e) wenigstens zwei beträgt, wobei
die Dauer so gewählt ist, dass bei einer Aufladung des Zwischenkreiskondensators (7) mit einer maximalen Dauerspannung der Hochvoltbatterie (3) dieser bis zu einer Schutzkleinspannung entladen wird, wenn der Zwischenkreiskondensator (7) von der Hochvoltbatterie (3) getrennt ist, wobei
zwischen zwei aufeinanderfolgenden weiteren Schaltvorgängen (18f, 18g) jeweils die zweite Wartezeit (24) vorgesehen ist, wobei
der Lastwiderstand (10) und seine Wärmeübertragung an den Stromrichter (2) derart eingerichtet sind, dass der Lastwiderstand (10) bei einem Anliegen der maximalen Dauerspannung der Hochvoltbatterie (3) während eines jeweiligen der fest vorgegebenen Anzahl von Schaltvorgängen (18a-18e) und einer Abkühlung während der oder einer jeweiligen Wartezeit (20) nicht beschädigt wird.

2. Vorrichtung nach Anspruch 1, wobei die fest vorgegebene Anzahl von Schaltvorgängen (18a-18e) wenigstens fünf beträgt.

3. Vorrichtung nach Anspruch 1 oder 2, wobei die fest vorgegebene Dauer (19) eines Schaltvorgangs (18a-18e) wenigstens eine Sekunde und/oder höchstens drei Sekunden beträgt, und/oder die Wartezeit wenigstens vier Sekunden und/oder höchstens sieben Sekunden beträgt.

4. Vorrichtung nach einem der vorhergehenden Ansprüche, wobei die zweite Wartezeit (24) mindestens zehn Sekunden, insbesondere mindestens fünfundzwanzig Sekunden, und/oder höchstens fünfzig Sekunden, insbesondere höchstens fünfunddreißig Sekunden, beträgt.

5. Vorrichtung nach einem der vorhergehenden Ansprüche, wobei die Steuerungseinrichtung (13) ferner dazu eingerichtet ist, die Entladeeinrichtung (8) zum Durchführen der weiteren Schaltvorgänge (18f, 18g) bis zum Erhalten eines Deaktivierungssignals am Eingang (14) anzusteuern.

6. Vorrichtung nach einem der vorhergehenden Ansprüche, wobei der Zwischenkreiskondensator (7) und die Hochvoltbatterie (3) über eine eine Trenneinrichtung (4) aufweisende elektrische Verbindung miteinander verbunden sind und ein Steuergerät (5) vorgesehen ist, welches unabhängig von der ersten Steuerungseinrichtung (13) betreibbar und dazu eingerichtet ist, einen Wechsel des Signalzustands als die Entladung des Zwischenkreiskondensators (7) anforderndes Eingangssignal (17) sowohl der Steuerungseinrichtung (13) als auch der Trenneinrichtung (4) bereitzustellen.

7. Verfahren zum Entladen eines Zwischenkreiskondensators (7) in einem Stromrichter (2) eines Fahrzeugs, welcher zur elektrischen Versorgung einer das Fahrzeug antreibenden elektrischen Maschine (6) verwendet wird und den Zwischenkreiskondensator (7) und eine parallel zum Zwischenkreiskondensator (7) geschaltete Entladeeinrichtung (8) mit einer Reihenschaltung aus einem steuerbaren Schaltelement (9) und einem Lastwiderstand (10) aufweist, wobei
das Schaltelement (9)
- in Abhängigkeit eines Signalzustands zum Durchführen einer fest vorgegebenen Anzahl von Schaltvorgängen (18a-18e), bei denen das Schaltelement (9) leitet, mit einer fest vorgegebenen Dauer (19) und einer fest vorgegebenen ersten Wartezeit (20) zwischen zwei aufeinanderfolgenden Schaltvorgängen (18a-18e) und
- nach dem Letzten der fest vorgegebenen Anzahl von Schaltvorgängen (18a-18e) und Ablauf einer fest vorgegebenen zweiten Wartezeit (24), die länger als die erste Wartezeit (20) ist, mehrfach zum Durchführen weiterer Schaltvorgänge (18f, 18g)
angesteuert wird, wobei
die fest vorgegebene Anzahl von Schaltvorgängen (18a-18e) wenigstens zwei beträgt, wobei
die Dauer so gewählt ist, dass bei einer Aufladung des Zwischenkreiskondensators (7) mit einer maximalen Dauerspannung der Hochvoltbatterie (3) dieser bis zu einer Schutzkleinspannung entladen wird, wenn der Zwischenkreiskondensator (7) von der Hochvoltbatterie (3) getrennt ist, wobei
zwischen zwei aufeinanderfolgenden weiteren Schaltvorgängen (18f, 18g) jeweils die zweite Wartezeit (24) vorgesehen ist, wobei
der Lastwiderstand (10) und seine Wärmeübertragung an den Stromrichter (2) derart eingerichtet sind, dass der Lastwiderstand (10) bei einem Anliegen der maximalen Dauerspannung einer den Stromrichter (2) speisenden Hochvoltbatterie (3) während eines jeweiligen der fest vorgegebenen Anzahl von Schaltvorgängen (18a-18e) und einer Abkühlung während der oder einer jeweiligen Wartezeit (20) nicht beschädigt wird.

8. Verfahren zur Herstellung einer Vorrichtung (1) zum Entladen eines Zwischenkreiskondensators (7), umfassend folgende Schritte:
- Bereitstellen einer Hochvoltbatterie (3) zum Speisen eines Stromrichters (2) und eines Zwischenkreiskondensators (7) für den Stromrichter (2);
- Bereitstellen einer Steuerungseinrichtung (13) für den Stromrichter (2), die dazu eingerichtet ist, ein Schaltelement (9) einer Entladeeinrichtung (8) in Abhängigkeit eines Signalzustands an einem Eingang (14) der Steuerungseinrichtung (13) zum Durchführen einer fest vorgegebenen Anzahl von Schaltvorgängen (18a-18e), bei denen das Schaltelement (9) leitet, mit einer fest vorgegebenen Dauer (19) und einer fest vorgegebenen ersten Wartezeit (20) zwischen zwei aufeinanderfolgenden Schaltvorgängen (18a-18e) sowie nach dem Letzten der fest vorgegebenen Anzahl von Schaltvorgängen (18a-18e) und Ablauf einer fest vorgegebenen zweiten Wartezeit (24), die länger als die erste Wartezeit (20) ist, mehrfach zum Durchführen weiterer Schaltvorgänge (18f, 18g) anzusteuern, wobei die fest vorgegebene Anzahl von Schaltvorgängen (18a-18e) wenigstens zwei beträgt, wobei die Dauer so gewählt ist, dass bei einer Aufladung des Zwischenkreiskondensators (7) mit einer maximalen Dauerspannung der Hochvoltbatterie (3) dieser bis zu einer Schutzkleinspannung entladen wird, wenn der Zwischenkreiskondensator (7) von der Hochvoltbatterie (3) getrennt ist, wobei zwischen zwei aufeinanderfolgenden weiteren Schaltvorgängen (18f, 18g) jeweils die zweite Wartezeit (24) vorgesehen ist;
- Bereitstellen der durch die Steuerungseinrichtung (13) anzusteuernden Entladeeinrichtung (8) mit einer Reihenschaltung aus dem steuerbaren Schaltelement (9) und einem Lastwiderstand (10), wobei der Lastwiderstand (10) derart gewählt und in den Stromrichter (2) integriert wird, dass der Lastwiderstand (10) bei einem jeweiligen Anliegen der maximalen Dauerspannung der Hochvoltbatterie (3) für die festgelegte Dauer (19) zum Entladen des Zwischenkreiskondensators (7) und anschließender Abkühlung während der oder einer jeweiligen Wartezeit (20) nicht beschädigt wird; und
- Verbinden der Steuerungseinrichtung (13) mit der Entladeeinrichtung (8).

## Claims

1. Device (1) for discharging an intermediate circuit capacitor (7), comprising a converter (2) for electrical supply of an electric machine (6) driving a vehicle, which has the intermediate circuit capacitor (7) and a discharge device (8) connected in parallel to the intermediate circuit capacitor (7) with a series connection of a controllable switching element (9) and a load resistor (10), and a high-voltage battery (3) feeding the converter (2) on the input side, wherein the converter (2) has a control device (13) which is configured to control the switching element (9)
- depending on a signal state at an input (14) of the control device (13) to perform a fixed predetermined number of switching operations (18a-18e), in which the switching element (9) conducts, with a fixed predetermined duration (19) and a fixed predetermined first waiting time (20) between two consecutive switching operations (18a-18e) and
- after the last of the fixed predetermined number of switching operations (18a-18e) and expiration of a fixed predetermined second waiting time (24), which is longer than the first waiting time (20), to repeatedly perform further switching operations (18f, 18g) wherein the fixed predetermined number of switching operations (18a-18e) is at least two, wherein the duration is selected such that when the intermediate circuit capacitor (7) is charged with a maximum continuous voltage of the high-voltage battery (3), it is discharged to a protective low voltage when the intermediate circuit capacitor (7) is disconnected from the high-voltage battery (3), wherein between two consecutive further switching operations (18f, 18g) the second waiting time (24) is provided in each case, wherein the load resistor (10) and its heat transfer to the converter (2) are configured such that the load resistor (10) is not damaged when the maximum continuous voltage of the high-voltage battery (3) is applied during each of the fixed predetermined number of switching operations (18a-18e) and cooling during the or a respective waiting time (20).

2. Device according to claim 1, wherein the fixed predetermined number of switching operations (18a-18e) is at least five.

3. Device according to claim 1 or 2, wherein the fixed predetermined duration (19) of a switching operation (18a-18e) is at least one second and/or at most three seconds, and/or the waiting time is at least four seconds and/or at most seven seconds.

4. Device according to any of the preceding claims, wherein the second waiting time (24) is at least ten seconds, in particular at least twenty-five seconds, and/or at most fifty seconds, in particular at most thirty-five seconds.

5. Device according to any of the preceding claims, wherein the control device (13) is further configured to control the discharge device (8) to perform the further switching operations (18f, 18g) until receiving a deactivation signal at the input (14).

6. Device according to any of the preceding claims, wherein the intermediate circuit capacitor (7) and the high-voltage battery (3) are connected to each other via an electrical connection having a disconnection device (4), and a control unit (5) is provided which is operable independently of the first control device (13) and is configured to provide a change of the signal state as an input signal (17) requesting the discharge of the intermediate circuit capacitor (7) to both the control device (13) and the disconnection device (4).

7. Method for discharging an intermediate circuit capacitor (7) in a converter (2) of a vehicle, which is used for electrical supply of an electric machine (6) driving the vehicle and has the intermediate circuit capacitor (7) and a discharge device (8) connected in parallel to the intermediate circuit capacitor (7) with a series connection of a controllable switching element (9) and a load resistor (10), wherein the switching element (9) is controlled
- depending on a signal state to perform a fixed predetermined number of switching operations (18a-18e), in which the switching element (9) conducts, with a fixed predetermined duration (19) and a fixed predetermined first waiting time (20) between two consecutive switching operations (18a-18e) and
- after the last of the fixed predetermined number of switching operations (18a-18e) and expiration of a fixed predetermined second waiting time (24), which is longer than the first waiting time (20), to repeatedly perform further switching operations (18f, 18g) wherein
the fixed predetermined number of switching operations (18a-18e) is at least two, wherein
the duration is selected such that when the intermediate circuit capacitor (7) is charged with a maximum continuous voltage of the high-voltage battery (3), it is discharged to a protective low voltage when the intermediate circuit capacitor (7) is disconnected from the high-voltage battery (3), wherein
between two consecutive further switching operations (18f, 18g) the second waiting time (24) is provided in each case, wherein
the load resistor (10) and its heat transfer to the converter (2) are configured such that the load resistor (10) is not damaged when the maximum continuous voltage of a high-voltage battery (3) feeding the converter (2) is applied during each of the fixed predetermined number of switching operations (18a-18e) and cooling during the or a respective waiting time (20).

8. Method for manufacturing a device (1) for discharging an intermediate circuit capacitor (7), comprising the following steps:
- Providing a high-voltage battery (3) for feeding a converter (2) and an intermediate circuit capacitor (7) for the converter (2);
- Providing a control device (13) for the converter (2), which is configured to control a switching element (9) of a discharge device (8) depending on a signal state at an input (14) of the control device (13) to perform a fixed predetermined number of switching operations (18a-18e), in which the switching element (9) conducts, with a fixed predetermined duration (19) and a fixed predetermined first waiting time (20) between two consecutive switching operations (18a-18e) as well as after the last of the fixed predetermined number of switching operations (18a-18e) and expiration of a fixed predetermined second waiting time (24), which is longer than the first waiting time (20), to repeatedly perform further switching operations (18f, 18g), wherein
- the fixed predetermined number of switching operations (18a-18e) is at least two,
- wherein the duration is selected such that when the intermediate circuit capacitor (7) is charged with a maximum continuous voltage of the high-voltage battery (3), it is discharged to a protective low voltage when the intermediate circuit capacitor (7) is disconnected from the high-voltage battery (3), wherein
- between two consecutive further switching operations (18f, 18g) the second waiting time (24) is provided in each case;
- Providing the discharge device (8) to be controlled by the control device (13) with a series connection of the controllable switching element (9) and a load resistor (10),
- wherein the load resistor (10) is selected and integrated into the converter (2) such that the load resistor (10) is not damaged when the maximum continuous voltage of the high-voltage battery (3) is applied for the fixed duration (19) to discharge the intermediate circuit capacitor (7) and subsequent cooling during the or a respective waiting time (20); and
- Connecting the control device (13) to the discharge device (8).

## Revendications

1. Dispositif (1) pour décharger un condensateur de circuit intermédiaire (7), comprenant un convertisseur (2) pour l'alimentation électrique d'une machine électrique (6) entraînant un véhicule, qui comporte le condensateur de circuit intermédiaire (7) et un dispositif de décharge (8) connecté en parallèle au condensateur de circuit intermédiaire (7) avec une connexion en série d'un élément de commutation contrôlable (9) et d'une résistance de charge (10), et une batterie haute tension (3) alimentant le convertisseur (2) du côté entrée, dans lequel le convertisseur (2) comporte un dispositif de commande (13) qui est configuré pour commander l'élément de commutation (9)
- en fonction d'un état de signal à une entrée (14) du dispositif de commande (13) pour effectuer un nombre prédéterminé fixe d'opérations de commutation (18a-18e), dans lesquelles l'élément de commutation (9) conduit, avec une durée prédéterminée fixe (19) et un premier temps d'attente prédéterminé fixe (20) entre deux opérations de commutation consécutives (18a-18e) et
- après la dernière du nombre prédéterminé fixe d'opérations de commutation (18a-18e) et l'expiration d'un second temps d'attente prédéterminé fixe (24), qui est plus long que le premier temps d'attente (20), pour effectuer de façon répétée d'autres opérations de commutation (18f, 18g) où le nombre prédéterminé fixe d'opérations de commutation (18a-18e) est d'au moins deux, où la durée est choisie de telle sorte que lorsque le condensateur de circuit intermédiaire (7) est chargé avec une tension continue maximale de la batterie haute tension (3), il est déchargé jusqu'à une tension basse de protection lorsque le condensateur de circuit intermédiaire (7) est déconnecté de la batterie haute tension (3), où entre deux autres opérations de commutation consécutives (18f, 18g), le second temps d'attente (24) est prévu dans chaque cas, où la résistance de charge (10) et son transfert de chaleur vers le convertisseur (2) sont configurés de telle sorte que la résistance de charge (10) n'est pas endommagée lorsque la tension continue maximale de la batterie haute tension (3) est appliquée pendant chacune du nombre prédéterminé fixe d'opérations de commutation (18a-18e) et le refroidissement pendant le ou un temps d'attente respectif (20).

2. Dispositif selon la revendication 1, dans lequel le nombre prédéterminé fixe d'opérations de commutation (18a-18e) est d'au moins cinq.

3. Dispositif selon la revendication 1 ou 2, dans lequel la durée prédéterminée fixe (19) d'une opération de commutation (18a-18e) est d'au moins une seconde et/ou au plus trois secondes, et/ou le temps d'attente est d'au moins quatre secondes et/ou au plus sept secondes.

4. Dispositif selon l'une quelconque des revendications précédentes, dans lequel le second temps d'attente (24) est d'au moins dix secondes, en particulier d'au moins vingt-cinq secondes, et/ou au plus cinquante secondes, en particulier au plus trente-cinq secondes.

5. Dispositif selon l'une quelconque des revendications précédentes, dans lequel le dispositif de commande (13) est en outre configuré pour commander le dispositif de décharge (8) afin d'effectuer les autres opérations de commutation (18f, 18g) jusqu'à la réception d'un signal de désactivation à l'entrée (14).

6. Dispositif selon l'une quelconque des revendications précédentes, dans lequel le condensateur de circuit intermédiaire (7) et la batterie haute tension (3) sont connectés l'un à l'autre via une connexion électrique comportant un dispositif de déconnexion (4), et une unité de commande (5) est prévue qui est opérable indépendamment du premier dispositif de commande (13) et est configurée pour fournir un changement de l'état du signal comme signal d'entrée (17) demandant la décharge du condensateur de circuit intermédiaire (7) à la fois au dispositif de commande (13) et au dispositif de déconnexion (4).

7. Procédé pour décharger un condensateur de circuit intermédiaire (7) dans un convertisseur (2) d'un véhicule, qui est utilisé pour l'alimentation électrique d'une machine électrique (6) entraînant le véhicule et comporte le condensateur de circuit intermédiaire (7) et un dispositif de décharge (8) connecté en parallèle au condensateur de circuit intermédiaire (7) avec une connexion en série d'un élément de commutation contrôlable (9) et d'une résistance de charge (10), dans lequel l'élément de commutation (9) est commandé •
- en fonction d'un état de signal pour effectuer un nombre prédéterminé fixe d'opérations de commutation (18a-18e), dans lesquelles l'élément de commutation (9) conduit, avec une durée prédéterminée fixe (19) et un premier temps d'attente prédéterminé fixe (20) entre deux opérations de commutation consécutives (18a-18e) et
- après la dernière du nombre prédéterminé fixe d'opérations de commutation (18a-18e) et l'expiration d'un second temps d'attente prédéterminé fixe (24), qui est plus long que le premier temps d'attente (20), pour effectuer de façon répétée d'autres opérations de commutation (18f, 18g) où le nombre prédéterminé fixe d'opérations de commutation (18a-18e) est d'au moins deux, où la durée est choisie de telle sorte que lorsque le condensateur de circuit intermédiaire (7) est chargé avec une tension continue maximale de la batterie haute tension (3), il est déchargé jusqu'à une tension basse de protection lorsque le condensateur de circuit intermédiaire (7) est déconnecté de la batterie haute tension (3), où entre deux autres opérations de commutation consécutives (18f, 18g), le second temps d'attente (24) est prévu dans chaque cas, où la résistance de charge (10) et son transfert de chaleur vers le convertisseur (2) sont configurés de telle sorte que la résistance de charge (10) n'est pas endommagée lorsque la tension continue maximale d'une batterie haute tension (3) alimentant le convertisseur (2) est appliquée pendant chacune du nombre prédéterminé fixe d'opérations de commutation (18a-18e) et le refroidissement pendant le ou un temps d'attente respectif (20).

8. Procédé de fabrication d'un dispositif (1) pour décharger un condensateur de circuit intermédiaire (7), comprenant les étapes suivantes :
- Fournir une batterie haute tension (3) pour alimenter un convertisseur (2) et un condensateur de circuit intermédiaire (7) pour le convertisseur (2) ;
- Fournir un dispositif de commande (13) pour le convertisseur (2), qui est configuré pour commander un élément de commutation (9) d'un dispositif de décharge (8) en fonction d'un état de signal à une entrée (14) du dispositif de commande (13) pour effectuer un nombre prédéterminé fixe d'opérations de commutation (18a-18e), dans lesquelles l'élément de commutation (9) conduit, avec une durée prédéterminée fixe (19) et un premier temps d'attente prédéterminé fixe (20) entre deux opérations de commutation consécutives (18a-18e) ainsi qu'après la dernière du nombre prédéterminé fixe d'opérations de commutation (18a-18e) et l'expiration d'un second temps d'attente prédéterminé fixe (24), qui est plus long que le premier temps d'attente (20), pour effectuer de façon répétée d'autres opérations de commutation (18f, 18g), où le nombre prédéterminé fixe d'opérations de commutation (18a-18e) est d'au moins deux, où la durée est choisie de telle sorte que lorsque le condensateur de circuit intermédiaire (7) est chargé avec une tension continue maximale de la batterie haute tension (3), il est déchargé jusqu'à une tension basse de protection lorsque le condensateur de circuit intermédiaire (7) est déconnecté de la batterie haute tension (3), où entre deux autres opérations de commutation consécutives (18f, 18g), le second temps d'attente (24) est prévu dans chaque cas ;
- Fournir le dispositif de décharge (8) à commander par le dispositif de commande (13) avec une connexion en série de l'élément de commutation contrôlable (9) et d'une résistance de charge (10), où la résistance de charge (10) est choisie et intégrée dans le convertisseur (2) de telle sorte que la résistance de charge (10) n'est pas endommagée lorsque la tension continue maximale de la batterie haute tension (3) est appliquée pendant la durée fixe (19) pour décharger le condensateur de circuit intermédiaire (7) et le refroidissement ultérieur pendant le ou un temps d'attente respectif (20) ; et
- Connecter le dispositif de commande (13) au dispositif de décharge (8).
